# EUROPEAN PATENT APPLICATION

(11) **EP 4 664 800 A1**
(43) Date of publication of application: **17.12.2025**
(21) Application number: 24777580.2
(22) Date of filing: 23.02.2024
(51) Int. Cl.: H04J 14/02, H04B 10/032

(54) **OPTICAL COMMUNICATION SYSTEM AND COMMUNICATION METHOD**

(30) Priority: 29.03.2023 CN 202310362305
(71) Applicant: Huawei Technologies Co., Ltd., Shenzhen, Guangdong 518129 (CN)
(72) Inventor: ZHAO, Zhenqing, Shenzhen, Guangdong 518129 (CN); GUAN, Donggen, Shenzhen, Guangdong 518129 (CN); SUN, Chun, Shenzhen, Guangdong 518129 (CN)
(74) Representative: Gill Jennings & Every LLP
(86) International application number: PCT/CN2024/078276
(87) International publication number: WO 2024/198790

(57) **Abstract**

This application provides an optical communication system and a communication method. The optical communication system includes: a first WSS, configured to transmit an optical signal with a first wavelength to a second WSS through a first link; the second WSS, configured to transmit the first optical signal with the first wavelength to a second node; a third WSS, configured to transmit an optical signal with a second wavelength to a fourth WSS through a second link; the fourth WSS, configured to transmit the optical signal with the second wavelength to the second node, where the third WSS is configured to transmit an optical signal with a third wavelength to the second WSS through a third link, and the second WSS is configured to transmit the optical signal with the third wavelength to the second node; and a first node, configured to: send the first optical signal with the first wavelength to the first WSS, send the optical signal with the second wavelength to the third WSS, and send the optical signal with the third wavelength to the third WSS, where the optical signals carry a same service. Three optical signal transmission paths are constructed based on the four WSSs, so that service sending protection is performed.

## Description

This application claims priority to Chinese Patent Application No. 202310362305.6, filed with the China National Intellectual Property Administration on March 29, 2023 and entitled "OPTICAL COMMUNICATION SYSTEM AND COMMUNICATION METHOD".

### TECHNICAL FIELD

This application relates to the field of optical transmission network technologies, optical communication technologies, and other technologies, and in particular, to an optical communication system and a communication method.

### BACKGROUND

With the advent of a computing power era, global economy accelerates transformation to digital economy, and a wavelength division multiplexing (Wavelength Division Multiplexing, WDM) system is gradually evolving from an analog system to a digital system. To ensure multiport, faster scheduling, and wider spectrum service transmission between nodes, an E2E ROADM+OTN all-optical network is established, and a new architecture is constructed based on a wavelength selective switch of an M×N structure. However, in the structure constructed based on the WSS of the M×N structure, when a core component like a wavelength selective switch is faulty or an optical fiber connection line is faulty, how to ensure service transmission is a technical problem that urgently needs to be resolved.

### SUMMARY

This application provides an optical communication system and a communication method. Three different transmission paths for sending optical signals from a first node to a second node are constructed based on four wavelength selective switches, and the optical signals that carry a same service are sent through the three different paths. When one or two of the three transmission paths are faulty, the service may continue to be sent to the second node through a remaining path, so that service sending protection is performed.

According to a first aspect, an optical communication system is provided, and includes: at least two nodes, configured to receive and/or send an optical signal; a first wavelength selective switch WSS, connected to a first node in the at least two nodes; a third WSS, connected to the first node; a second WSS, connected to a second node in the at least two nodes, where there is a first link between the first WSS and the second WSS, and there is a third link between the third WSS and the second WSS; and a fourth WSS, connected to the second node, where there is a second link between the third WSS and the fourth WSS. The first WSS is configured to transmit an optical signal with a first wavelength to the second WSS through the first link, the second WSS is configured to transmit the first optical signal with the first wavelength to the second node, the third WSS is configured to transmit an optical signal with a second wavelength to the fourth WSS through the second link, the fourth WSS is configured to transmit the optical signal with the second wavelength to the second node, the third WSS is configured to transmit an optical signal with a third wavelength to the second WSS through the third link, the second WSS is configured to transmit the optical signal with the third wavelength to the second node, and the first node is configured to: send the first optical signal with the first wavelength to the first WSS, send the second optical signal with the second wavelength to the third WSS, and send the third optical signal with the third wavelength to the third WSS, where the first optical signal, the second optical signal, and the third optical signal carry a same service.

Three different transmission paths for optical signals from the first node to the second node are constructed by using the four wavelength selective switches WSSs, and the optical signals that carry a same service are sent through the three different paths. When one or two of the three transmission paths are faulty, the service may continue to be sent to the second node through a remaining path, so that service sending protection is performed. Generally, a "1+1" mode is used for service protection. To be specific, on the basis that optical signals that carry a same service are sent by the first node to the second node in two directions to protect the service, a different transmission path for an optical signal is added, so that the service can be protected to a greater extent.

With reference to the first aspect, in some implementations of the first aspect, in the system, the third link includes at least two scheduling modules, where the scheduling module includes at least any one of a WSS or an optical coupler/beam splitter, and the at least two scheduling modules are configured to transmit the optical signal with the third wavelength between different nodes; and a third node in the at least two nodes includes the first WSS, the second WSS, and a first scheduling module in the at least two scheduling modules, and a fourth node in the at least two nodes includes the third WSS, the fourth WSS, and a second scheduling module in the at least two nodes.

By disposing the at least two scheduling modules, an optical signal can be transmitted between different nodes, so that when the second WSS and the third WSS are located at different nodes, an optical layer between the third node and the fourth node is passed through, and an optical signal transmission path is constructed from the third WSS to the second WSS.

With reference to the first aspect, in some implementations of the first aspect, in the system, the first scheduling module, the second scheduling module, and the third WSS have a fourth link; the first WSS is further configured to transmit an optical signal with a fourth wavelength to the third node; the third WSS is further configured to transmit an optical signal with a fifth wavelength to the third node through the fourth link; and the first node is further configured to: send the fourth optical signal with the fourth wavelength to the first WSS, and send the fifth optical signal with the fifth wavelength to the third WSS, where the fourth optical signal and the fifth optical signal carry a same service.

By disposing the at least two scheduling modules, optical signals can be transmitted between different nodes, so that when the first WSS is located at the third node and the third WSS is located at the fourth node, an optical layer between the third node and the fourth node is passed through, and another optical signal transmission path from the first node to the third node is constructed through the third WSS, thereby implementing service protection.

With reference to the first aspect, in some implementations of the first aspect, in the system, there is a fifth link between the third WSS and the second scheduling module, the fifth link corresponds to a sixth wavelength, there is a sixth link between the first scheduling module and the second scheduling module, and the sixth link corresponds to a seventh wavelength; the first WSS is further configured to transmit an optical signal with an eighth wavelength to the third node; the third WSS is further configured to transmit a seventh optical signal with the sixth wavelength to the fourth node; the first node is further configured to: send the sixth optical signal with the eighth wavelength to the first WSS, and send the seventh optical signal with the sixth wavelength to the third WSS, where the sixth optical signal and the seventh optical signal carry a first service; and the fourth node is configured to: receive the seventh optical signal, perform integration for the first service and a second service, and send an eighth optical signal with the seventh wavelength through the sixth link, where the eighth optical signal carries the first service and the second service.

To be specific, after the optical layer between the third node and the fourth node is passed through, service transmission may be directly performed between the third node and the fourth node by using optical signals, or integration for services may be first performed by the fourth node based on a feature that a node can perform integration for services, and then the protected services are sent.

With reference to the first aspect, in some implementations of the first aspect, in the system, the first WSS is configured to transmit an optical signal in a first resource pool, the first resource pool includes T sub-signals with different wavelengths, T is a positive integer greater than 1, the T sub-signals with different wavelengths carry services of the first node and the fourth node, and the second optical signal and the third optical signal belong to the T sub-signals with different wavelengths. The second WSS is configured to transmit an optical signal in a second resource pool, the second resource pool includes S sub-signals with different wavelengths, S is a positive integer greater than 1, the S sub-signals with different wavelengths carry services of the first node and the third node, and the first optical signal belongs to the S sub-signals with different wavelengths.

This may be understood as that, in a first direction, the third node and the first node connected to the first WSS share an optical signal in the first resource pool, and perform service transmission via the sub-signals with a plurality of wavelengths included in the first resource pool. In a second direction, the fourth node and the first node connected to the third WSS share an optical signal in the second resource pool, and perform service transmission via the sub-signals with a plurality of wavelengths included in the second resource pool. Therefore, the first node may transmit a same service by using optical signals of the two resource pools, to ensure service transmission when there is a problem, for example, a core component (for example, a WSS) is faulty or an optical fiber is faulty, in the system.

With reference to the first aspect, in some implementations of the first aspect, the optical communication system belongs to a metropolitan area network system, the first node is a central office site, the second node is a core site or a sub-core site, and the third node and the fourth node are aggregation sites.

The first WSS and the second WSS are disposed at the third node and the third WSS and the fourth WSS are disposed at the fourth node. In this way, an optical layer between the first node and the second node may be directly passed through, and the first node may transmit a service to the second node via a wavelength-level optical signal, and convergence and integration are not required at the third node or the fourth node, thereby improving service transmission efficiency of the aggregation site and the core site/sub-core site.

According to a second aspect, a communication method is provided, and is applied to an optical communication system. The optical communication system includes at least two nodes, the at least two nodes include a first node and a second node, the first node is connected to a first wavelength selective switch WSS, the first node is connected to a third WSS, the second node is connected to a second WSS, and the second node is connected to a fourth WSS. There is a first link between the first WSS and the second WSS, the first link corresponds to a first wavelength, there is a second link between the third WSS and the fourth WSS, the second link corresponds to a second wavelength, there is a third link between the third WSS and the second WSS, and the third link corresponds to a third wavelength. The method includes: The first node sends a first optical signal with the first wavelength to the first WSS. The first node sends a second optical signal with the second wavelength and a third optical signal with the third wavelength to the third WSS, where the first optical signal, the second optical signal, and the third optical signal carry a same service.

Three different transmission paths for optical signals from the first node to the second node are constructed by using the four wavelength selective switches WSSs, and the optical signals that carry a same service are sent through the three different paths. When one or two of the three transmission paths are faulty, the service may continue to be sent to the second node through a remaining path, so that service sending protection is performed. Generally, a "1+1" mode is used for service protection. To be specific, on the basis that optical signals that carry a same service are sent by the first node to the second node in two directions to protect the service, a different transmission path for an optical signal is added, so that the service can be protected to a greater extent.

With reference to the second aspect, in some implementations of the second aspect, in the optical communication system, the third link includes at least two scheduling modules, where the scheduling module includes at least any one of a WSS or an optical coupler/beam splitter, and the at least two scheduling modules are configured to transmit the optical signal with the third wavelength between different nodes; and a third node in the at least two nodes includes the first WSS, the second WSS, and a first scheduling module in the at least two scheduling modules, and a fourth node in the at least two nodes includes the third WSS, the fourth WSS, and a second scheduling module in the at least two nodes.

By disposing the at least two scheduling modules, an optical signal can be transmitted between different nodes, so that when the second WSS and the third WSS are located at different nodes, an optical layer between the third node and the fourth node is passed through, and an optical signal transmission path is constructed from the third WSS to the second WSS.

With reference to the second aspect, in some implementations of the second aspect, in the optical communication system, the first scheduling module, the second scheduling module, and the third WSS have a fourth link, and the fourth link corresponds to a fourth wavelength. The method further includes: The first node sends a fourth optical signal with the fourth wavelength to the first WSS. The first node sends a fifth optical signal with a fifth wavelength to the third WSS. The fourth optical signal and the fifth optical signal carry a same service.

By disposing the at least two scheduling modules, optical signals can be transmitted between different nodes, so that when the first WSS is located at the third node and the third WSS is located at the fourth node, the optical layer between the third node and the fourth node is passed through, and two optical signal transmission paths from the first node to the third node are constructed through the first WSS and the third WSS, thereby implementing service protection.

With reference to the second aspect, in some implementations of the second aspect, in the optical communication system, there is a fifth link between the third WSS and the second scheduling module, the fifth link corresponds to a sixth wavelength, there is a sixth link between the first scheduling module and the second scheduling module, and the sixth link corresponds to a seventh wavelength. The method further includes: The first node sends a sixth optical signal with an eighth wavelength to the first WSS. The first node further sends a seventh optical signal with the sixth wavelength to the third WSS, where the sixth optical signal and the seventh optical signal carry a first service. The fourth node receives the seventh optical signal, and performs integration for the first service and a second service. The fourth node sends an eighth optical signal with the seventh wavelength through the sixth link, where the eighth optical signal carries the first service and the second service.

To be specific, after the optical layer between the third node and the fourth node is passed through, service transmission may be directly performed between the third node and the fourth node by using optical signals, or integration for services may be first performed by the fourth node based on a feature that a node can perform integration for services, and then the protected services are sent.

With reference to the second aspect, in some implementations of the second aspect, the first WSS is configured to transmit an optical signal in a first resource pool, the first resource pool includes T sub-signals with different wavelengths, T is a positive integer greater than 1, the T sub-signals with different wavelengths are used by the first node and the fourth node for service transmission, and the second optical signal and the third optical signal belong to the T sub-signals with different wavelengths.

The second WSS is configured to transmit an optical signal in a second resource pool, the second resource pool includes S sub-signals with different wavelengths, S is a positive integer greater than 1, the S sub-signals with different wavelengths are used by the first node and the third node for service transmission, and the first optical signal belongs to the S sub-signals with different wavelengths.

This may be understood as that, in a first direction, the third node and the first node connected to the first WSS share an optical signal in the first resource pool, and perform service transmission via the sub-signals with a plurality of wavelengths included in the first resource pool. In a second direction, the fourth node and the first node connected to the third WSS share an optical signal in the second resource pool, and perform service transmission via the sub-signals with a plurality of wavelengths included in the second resource pool. Therefore, the first node may transmit a same service by using optical signals of the two resource pools, to ensure service transmission when there is a problem, for example, a core component (for example, a WSS) is faulty or an optical fiber is faulty, in the system.

With reference to the second aspect, in some implementations of the second aspect, the optical communication system belongs to a metropolitan area network system, the first node is a central office site, the second node is a core site or a sub-core site, and the third node and the fourth node are aggregation sites.

The first WSS and the second WSS are disposed at the third node and the third WSS and the fourth WSS are disposed at the fourth node. In this way, an optical layer between the first node and the second node may be directly passed through, and the first node may transmit a service to the second node via a wavelength-level optical signal, and convergence and integration are not required at the third node or the fourth node, thereby improving service transmission efficiency of the aggregation site and the core site/sub-core site.

### BRIEF DESCRIPTION OF DRAWINGS

FIG. 1 is a diagram of an application scenario of an optical communication system and a communication method according to an embodiment of this application;
FIG. 2 is a diagram of an optical communication system according to an embodiment of this application;
FIG. 3 is a diagram of another optical communication system according to an embodiment of this application;
FIG. 4 is a diagram of another optical communication system according to an embodiment of this application;
FIG. 5 is a diagram of another optical communication system according to an embodiment of this application;
FIG. 6 is a diagram of a sending module according to an embodiment of this application;
FIG. 7 is a diagram of a receiving module according to an embodiment of this application;
FIG. 8 is a diagram of a communication method according to an embodiment of this application;
FIG. 9 is a diagram of another communication method according to an embodiment of this application; and
FIG. 10 is a diagram of another communication method according to an embodiment of this application.

### DESCRIPTION OF EMBODIMENTS

The following describes the technical solutions of this application with reference to the accompanying drawings. For ease of understanding of embodiments of this application, the following descriptions are provided.

First, in the following embodiments of this application, the terms "include", "have", and any other variants thereof are intended to cover a non-exclusive inclusion. For example, a process, a method, a system, a product, or a device that includes a series of steps or units is not necessarily limited to those steps or units that are expressly listed, but may include another step or unit that is not expressly listed or that is inherent to the process, the method, the product, or the device.

Second, in embodiments of this application, the term "example", "for example", or the like is used to represent giving an example, an illustration, or a description. An embodiment or a design scheme described as an "example" or "for example" should not be construed as being more preferred or more advantageous than another embodiment or design scheme. Use of the term "example", "for example", or the like is intended to present a related concept in a specific manner, to facilitate understanding.

Third, in the following text descriptions or accompanying drawings in embodiments of this application, the terms such as "first", "second", and various numbers are merely used for distinguishing for ease of description, but do not necessarily describe a particular order or sequence, and are not used to limit the scope of embodiments of this application. For example, in embodiments of this application, the terms are used for distinguishing between different transceivers.

The following describes application scenarios of an optical communication system and a communication method in this application. The optical communication system and the communication method described in this application may be applied to various optical communication systems, such as a wavelength division multiplexing (Wavelength Division Multiplexing, WDM) system, an all-optical network (All-Optical Network, AON), a metropolitan area network (MAN, Metropolitan Area Network), and an optical transport network (OTN, Optical Transport Network) system.

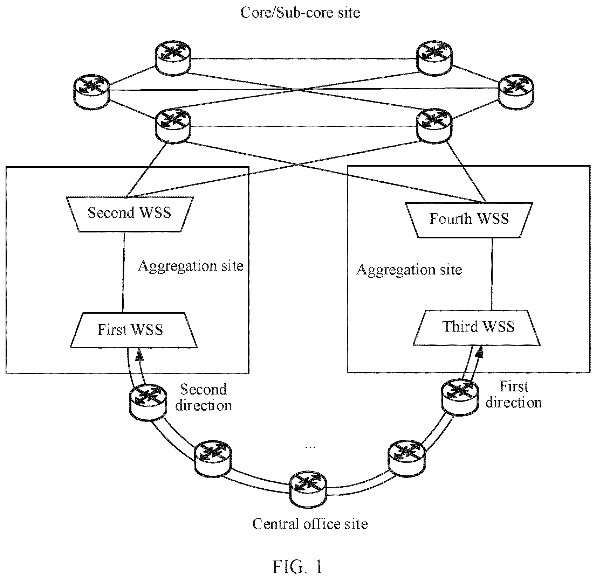

FIG. 1 is a diagram of an application scenario of an optical communication system and a communication method according to an embodiment of this application. The application scenario includes at least three types of nodes, and the three types of nodes may be a core site, an aggregation site, and a central office site. The core site (or a sub-core site) belongs to a core layer and is a backbone part of the system, and is mainly used for service transmission with large bandwidth and high-speed scheduling. At the core layer, a plurality of core sites (or sub-core sites) may be connected in a mesh (Mesh) structure for communication, and service transmission may be directly performed between the plurality of core sites (or sub-core sites). The aggregation site is an intermediary between the core site and an access site, and may be configured to: perform convergence and integration operations on data transmitted by a plurality of access sites, and provide the data to an uplink on the core layer, to reduce a device load of the core site. The central office (CO, Central office) site may be connected to one or more access devices, and a plurality of central office sites may be sequentially connected in a ring structure (CO ring), for service transmission.

In an OTN, in a manner in which the foregoing three types of nodes are connected and perform service transmission between each other through optical layers, a wavelength division pooling structure may be used. The wavelength division pooling structure is constructed by using a wavelength selective switch (WSS, Wavelength Selective Switch) that is based on an M×N structure and that is of a reconfigurable optical add-drop multiplexer (ROADM, Reconfigurable optical add-drop multiplexer). The WSS of the M×N structure is a WSS that includes a plurality of input ports and a plurality of output ports, and the WSS may add or drop, based on a wavelength, an input wavelength-level signal to any port for output. The WSS of the M×N structure may be located in the aggregation site. The wavelength division pooling structure has the following features.
(1) A plurality of CO rings may be connected to the WSS of the M×N structure. FIG. 1 is used as an example. M input ports of a first WSS may be connected to M CO rings, the input ports are in one-to-one correspondence with the CO rings, and service transmission is performed in a first direction through an optical fiber. Similar to the first WSS, the M CO rings may be further connected to a third WSS, and service transmission is performed in a second direction through an optical fiber.
(2) The central office site and the aggregation site share signals of a resource pool. FIG. 1 is used as an example. The first WSS can be configured to transmit an optical signal in a first resource pool, and the first resource pool includes sub-signals with a plurality of wavelengths. In the first direction, the first aggregation site and a central office site in a CO ring connected to the first WSS share an optical signal in the first resource pool, and perform service transmission via the sub-signals with a plurality of wavelengths included in the first resource pool. Similar to the first WSS, in FIG. 1, the third WSS can be configured to transmit an optical signal in a second resource pool, and the second resource pool includes sub-signals with a plurality of wavelengths. In the second direction, a second aggregation site and a central office site in a CO ring connected to a second WSS share an optical signal in the second resource pool, and perform service transmission via the sub-signals with a plurality of wavelengths included in the second resource pool.
(3) The central office site and the core site (or the sub-core site) are directly passed through via an optical layer. FIG. 1 is used as an example. The central office site and the core site may be connected to each other and establish an uplink based on the first WSS and the second WSS, or may be connected to each other and establish an uplink based on the third WSS and a fourth WSS, so that the central office site and the core site can directly perform service transmission, and implementation of the service at the aggregation site and convergence and integration operations are not required.

With the advent of a computing power era, global economy accelerates transformation to digital economy, and a wavelength division multiplexing (Wavelength Division Multiplexing, WDM) system is gradually evolving from an analog system to a digital system. To ensure internode service transmission with a plurality of ports, faster scheduling, and a wider spectrum, an E2E ROADM+OTN all-optical network is established, and a new architecture is constructed based on the wavelength selective switch of the M×N structure. However, in the structure constructed based on the WSS of the M×N structure, when a core component like a wavelength division selective switch is faulty or an optical fiber connection line is faulty, how to ensure service transmission is a technical problem that urgently needs to be resolved.

Based on the foregoing problem, an optical communication system and a communication method are provided in this application. Three different transmission paths for sending optical signals from a first node to a second node are constructed based on four wavelength selective switches, and the optical signals that carry a same service are sent through the three different paths. When one or two of the three transmission paths are faulty, the service may continue to be sent to the second node through a remaining path, so that service sending protection is performed.

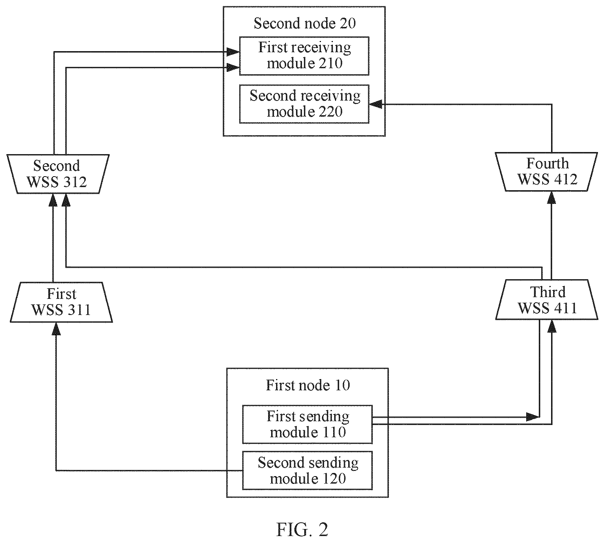

The following describes the optical communication system in this application. FIG. 2 is a diagram of an optical communication system according to an embodiment of this application. The system may include a first node 10, a second node 20, a first WSS 311, a second WSS 312, a third WSS 411, and a fourth WSS 412.

The first node 10 and the second node 20 are configured to receive and/or send an optical signal. The first node 10 is connected to the first WSS 311, and the first node 10 is connected to the third WSS 411. The second node 20 is connected to the second WSS 312, and the second node 20 is connected to the fourth WSS 412.

Specifically, the first node 10 may include a first sending module 110 and a second sending module 120. The first sending module 110 in the first node 10 is connected to the third WSS 411, and may transmit a service to the third WSS 411 in a first direction. The second sending module 120 in the first node 10 is connected to the first WSS 311, and may transmit a service to the first WSS 311 in a second direction. The second node 20 may include a first receiving module 210 and a second receiving module 220. The first receiving module 210 in the second node 20 is connected to the second WSS 312, to receive a service from the second WSS 312. The second receiving module 220 in the second node 20 is connected to the fourth WSS 412, to receive a service from the fourth WSS 412. In other words, service transmission in two directions may be performed between the first node 10 and the second node 20.

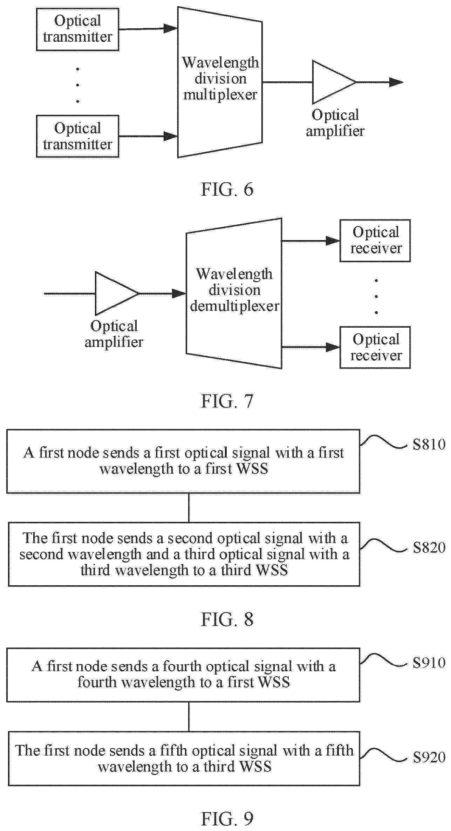

FIG. 6 is a diagram of a sending module according to an embodiment of this application. As shown in FIG. 6, the first sending module 110 and the second sending module 120 may include an optical transmitter and a multiplexer/demultiplexer. The optical transmitter is configured to send an optical signal, and the multiplexer/demultiplexer may be configured to perform wavelength division multiplexing on the optical signal. The sending module may be further configured with an optical amplifier based on an actual situation, and is configured to amplify the optical signal.

FIG. 7 is a diagram of a receiving module according to an embodiment of this application. As shown in FIG. 7, the first receiving module 210 and the second receiving module 220 may include a multiplexer/demultiplexer and an optical receiver. The multiplexer/demultiplexer may be configured to perform wavelength division demultiplexing on an optical signal. The receiving module may be further configured with an optical amplifier based on an actual situation, to amplify the optical signal.

The multiplexer/demultiplexer in FIG. 6 and FIG. 7 may be any one of a WSS, an arrayed optical waveguide, or a cascaded filter.

In the system in this application, ports between WSSs are connected, and a link is configured for transmission of an optical signal. There is a first link between the first WSS 311 and the second WSS 312, and the first link corresponds to a first wavelength. There is a second link between the third WSS 411 and the fourth WSS 412, and the second link corresponds to a second wavelength. There is a third link between the third WSS 411 and the second WSS 312, and the third link corresponds to a third wavelength.

Specific selection of the first wavelength, the second wavelength, and the third wavelength is determined based on an actual situation. For example, the first wavelength and the third wavelength may be set to be the same, the first wavelength and the second wavelength are different, and the second wavelength and the third wavelength are different.

Any one of the first WSS, the second WSS, the third WSS, and the fourth WSS may include M input ports and N input ports, where M and N are positive integers greater than or equal to 2. Because a WSS may schedule, based on a wavelength of an optical signal input into the WSS, the optical signal to different ports for output, ports between different WSSs may be connected, and an optical signal with a specific wavelength is scheduled through a link between the WSSs, so that an optical signal sent by the first node 10 is transmitted to the second node 20. For example, in FIG. 2, the first WSS 311 can transmit an optical signal with the first wavelength to the second WSS 312 through the first link, and the second WSS 312 can transmit the first optical signal with the first wavelength to the second node 20. The third WSS 411 can transmit an optical signal with the second wavelength to the fourth WSS 412 through the second link, and the fourth WSS 412 can transmit the optical signal with the second wavelength to the second node 20. The third WSS 411 can transmit an optical signal with the third wavelength to the second WSS 312 through the third link, and the second WSS 312 can transmit the optical signal with the third wavelength to the second node 20.

Three paths for sending optical signals from the first node 10 to the second node 20 may be constructed by using the WSSs. When the first node 10 is configured to: send the first optical signal with the first wavelength to the first WSS 311, send the second optical signal with the second wavelength to the third WSS 411, and send the third optical signal with the third wavelength to the third WSS 411, and the first optical signal, the second optical signal, and the third optical signal carry a same service, in an example of the case in FIG. 2, the same service may be carried in the optical signals with different wavelengths and transmitted along three paths:
first path: the first optical signal with the first wavelength may be transmitted along the second sending module 120-the first WSS 311-the second WSS 312-the first receiving module 210;
second path: the second optical signal with the second wavelength may be transmitted along the first sending module 110-the third WSS 411-the fourth WSS 412-the second receiving module 220; and
third path: the third optical signal with the third wavelength may be transmitted along the third WSS 411-the second WSS 312-the first receiving module 210.

A service sent by using the optical signal on the first path may be an operating service, and services sent through the second path and the third path may be protected services.

It should be understood that, in this application, the first node may send the first optical signal, the second optical signal, and the third optical signal simultaneously or not simultaneously. Similarly, the second node may receive the foregoing optical signals simultaneously or not simultaneously. Specifically, this may be determined based on an actual service protection manner. For example, in a "concurrent sending and selective receiving" mode, the first node may send three types of optical signals simultaneously, and the second node performs selective receiving; or the first node may switch a path and send the foregoing optical signals when a fault is detected on any path.

In FIG. 2, three different transmission paths for optical signals from the first node to the second node are constructed by using the four wavelength selective switches WSSs, and the optical signals that carry a same service are sent through the three different paths. When one or two of the three transmission paths are faulty, the service may continue to be sent to the second node through a remaining path, so that service sending protection is performed. Generally, a "1+1" mode is used for service protection. To be specific, on the basis that optical signals that carry a same service are sent by the first node to the second node in two directions to protect the service, a different transmission path for an optical signal is added, so that the service can be protected to a greater extent.

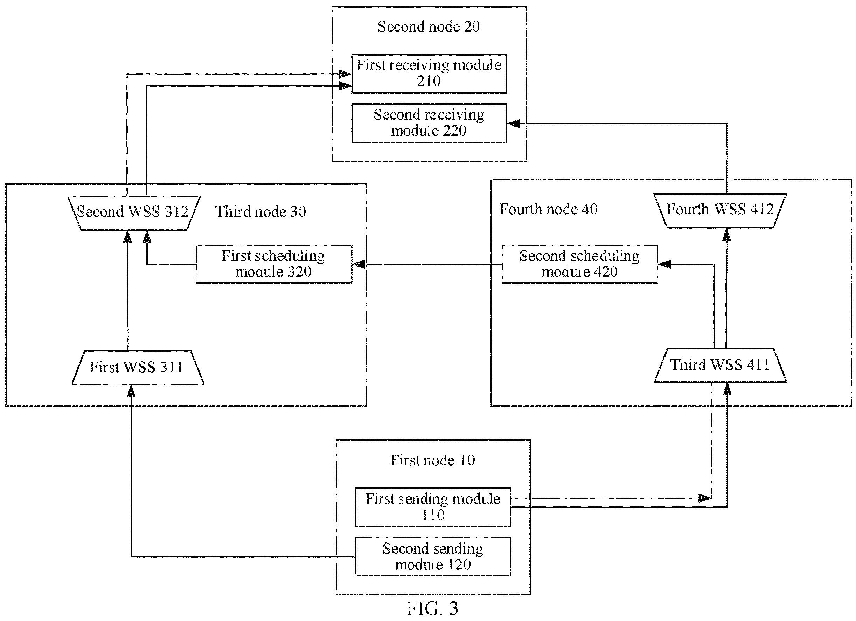

In some implementations, FIG. 3 is a diagram of another optical communication system according to an embodiment of this application. A first node, a second node, and a connection relationship between the first node, the second node, and WSSs are similar to those in FIG. 2. In addition, the system may further include a third node 30 and a fourth node 40. The third node 30 includes the first WSS 311, the second WSS 312, and a first scheduling module 320. The fourth node 40 includes the third WSS 411, the fourth WSS 412, and a second scheduling module 420. The second scheduling module 420 is connected to the third WSS 411, and the first scheduling module 320 is connected to the second scheduling module 420. The first scheduling module 320 and the second scheduling module 420 are configured to transmit an optical signal between different nodes.

The first scheduling module 320 and the second scheduling module 420 may be modules disposed separately (single) or disposed in pairs (couple). Each scheduling module may be in a form of an optical board, and the optical board includes a WSS or an optical coupler/beam splitter, to transmit an optical signal between different nodes.

The third path further includes the first scheduling module 320 and the second scheduling module 420, and the third path may be as follows: The third optical signal with the third wavelength is transmitted along the third WSS 411-the second scheduling module 420-the first scheduling module 320-the second WSS 312-the first receiving module 210.

In FIG. 3, by disposing at least two scheduling modules, an optical signal can be transmitted between different nodes, so that when the second WSS and the third WSS are located at different nodes, an optical layer between the third node and the fourth node is passed through, and an optical signal transmission path is constructed from the third WSS to the second WSS.

In some implementations, the first scheduling module 320, the second scheduling module 420, and the third WSS 411 have a fourth link, the first WSS 311 can further transmit a fourth optical signal with a fourth wavelength to the third node 30, and the third WSS 411 can further transmit a fifth optical signal with a fifth wavelength to the third node 30 through the fourth link.

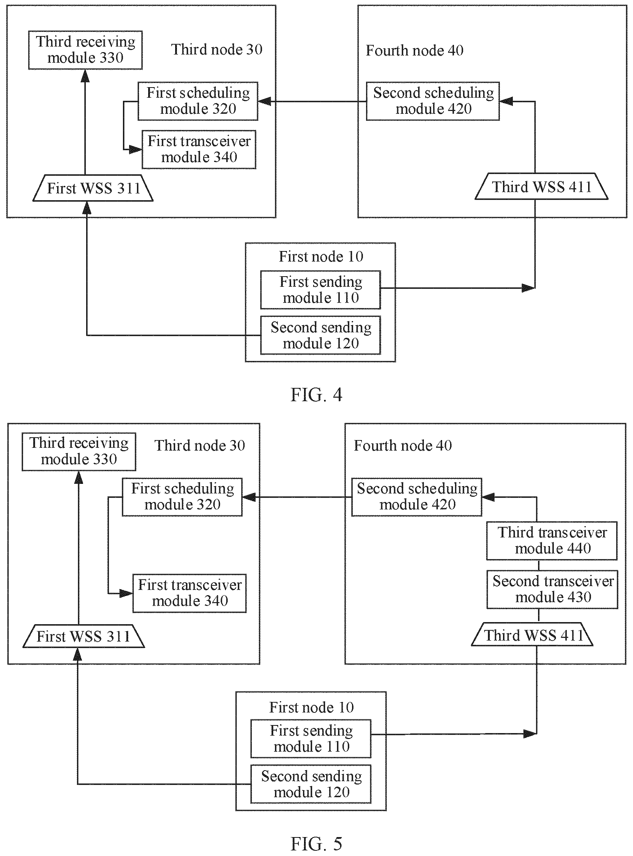

The case in FIG. 4 is used as an example. FIG. 4 is a diagram of another optical communication system according to an embodiment of this application. A first node, a third node, a fourth node, and a relationship therebetween are similar to those in FIG. 3. The third node 30 may further include a third receiving module 330 and a first transceiver module 340. The third receiving module 330 is connected to the first WSS, and the first transceiver module 340 is connected to the first scheduling module 320. A transceiver module may be considered as a combination of the sending module shown in FIG. 6 and the receiving module shown in FIG. 7. Details are not described herein again.

Two paths for sending optical signals from the first node to the third node may be further constructed by using the WSSs. When the first node is further configured to: send the fourth optical signal to the first WSS 311, and send the fifth optical signal to the third WSS 411, and the fourth optical signal and the fifth optical signal carry a same service, in an example of the case in FIG. 4, the same service may be carried in optical signals with different wavelengths and transmitted along two paths:
fourth path: the fourth optical signal may be transmitted along a second sending module 120-the first WSS 311-the third receiving module 330; and
fifth path: the fifth optical signal may be transmitted along a first sending module 110-the third WSS 411-the second scheduling module 420-the first scheduling module 320-the first transceiver module 340.

By disposing at least two scheduling modules, optical signals can be transmitted between different nodes, so that when the first WSS is located at the third node and the third WSS is located at the fourth node, an optical layer between the third node and the fourth node is passed through, and another optical signal transmission path from the first node to the third node is constructed through the third WSS, thereby implementing service protection.

In some implementations, there is a fifth link between the third WSS 411 and the second scheduling module 420, and the fifth link corresponds to a sixth wavelength. There is a sixth link between the first scheduling module 320 and the second scheduling module 420, and the sixth link corresponds to a seventh wavelength. The first WSS 311 can further transmit a sixth optical signal with an eighth wavelength to the third node, and the third WSS 411 can further transmit a seventh optical signal with the sixth wavelength to the fourth node.

The case in FIG. 5 is used as an example. FIG. 5 is a diagram of another optical communication system according to an embodiment of this application. A first node, a third node, a fourth node, and a relationship therebetween are similar to those in FIG. 4. The fourth node 40 may further include a second transceiver module 430 and a third transceiver module 440. The third WSS 411 is connected to the second transceiver module 430, the second transceiver module 430 is connected to the third transceiver module 440, and the third transceiver module 440 is connected to the second scheduling module 420. A transceiver module may be considered as a combination of the sending module shown in FIG. 6 and the receiving module shown in FIG. 7. Details are not described herein again.

Two paths for sending optical signals from the first node to the third node may be further constructed by using the WSSs. When the first node is further configured to: send a sixth optical signal to the first WSS 311, and send a seventh optical signal to the third WSS 411, and the sixth optical signal and the seventh optical signal carry a first service, in an example of the case in FIG. 5, the first service may be carried in optical signals with different wavelengths and transmitted along two paths:
sixth path: the sixth optical signal may be transmitted along a second sending module 120-the first WSS 311-the third receiving module 330; and
seventh path: the seventh optical signal may be transmitted to the fourth node 40 along a first sending module 110-the third WSS 411-the second transceiver module 430. After receiving the seventh optical signal, the fourth node may perform integration for the first service carried in the seventh optical signal and another service, for example, perform integration for the first service and a second service, and continue to send, via the third transceiver module 440, the first service and the second service in an eighth optical signal. The eighth optical signal may be transmitted along the third transceiver module 440-the second scheduling module 420-the first scheduling module 320-a first transceiver module 340.

To be specific, after an optical layer between the third node and the fourth node is passed through, service transmission may be directly performed between the third node and the fourth node by using optical signals, or integration for services may be first performed by the fourth node based on a feature that a node can perform integration for services, and then the protected services are sent.

In some implementations, the optical communication systems shown in FIG. 2 to FIG. 5 may be of a wavelength division pooling structure.

The optical communication systems belong to a metropolitan area network system, the first node is a central office site, the second node is a core site or a sub-core site, and the third node and the fourth node are aggregation sites. In the metropolitan area network system, the third node and the fourth node are configured to: implement a service transmitted by the first node to the second node, perform convergence and integration, and transmit, to the second node through an uplink, service sent by the first node.

The first WSS and the second WSS are disposed at the third node and the third WSS and the fourth WSS are disposed at the fourth node. In this way, an optical layer between the first node and the second node may be directly passed through, and the first node may transmit a service to the second node via a wavelength-level optical signal, and convergence and integration are not required at the third node or the fourth node, thereby improving service transmission efficiency of the aggregation site and the core site/sub-core site.

The first WSS can be configured to transmit an optical signal in a first resource pool, the first resource pool includes T sub-signals with different wavelengths, T is a positive integer greater than 1, the T sub-signals with different wavelengths carry services of the first node and the fourth node, and the second optical signal and the third optical signal belong to the T sub-signals with different wavelengths. The second WSS can be configured to transmit an optical signal in a second resource pool, the second resource pool includes S sub-signals with different wavelengths, S is a positive integer greater than 1, the S sub-signals with different wavelengths carry services of the first node and the third node, and the first optical signal belongs to the S sub-signals with different wavelengths.

This may be understood as that, in a first direction, the third node and the first node connected to the first WSS share an optical signal in the first resource pool, and perform service transmission via the sub-signals with a plurality of wavelengths included in the first resource pool. In a second direction, the fourth node and the first node connected to the third WSS share an optical signal in the second resource pool, and perform service transmission via the sub-signals with a plurality of wavelengths included in the second resource pool. Therefore, the first node may transmit a same service by using optical signals of the two resource pools, to ensure service transmission when there is a problem, for example, a core component (for example, a WSS) is faulty or an optical fiber is faulty, in the system.

For example, when the first WSS shown in FIG. 2 or the first link between the first WSS and the second WSS is faulty, the first node may still transmit a service to the second node through the second path and the third path. For another example, when there is a problem in components such as the first WSS and the fourth WSS and in connection between the components, the first node may further transmit a service through the third path, so as to ensure service transmission between the aggregation site and the core site/sub-core site.

In addition, scheduling modules are disposed at the third node and the fourth node, and an optical layer between two aggregation sites is passed through. In other words, in a wavelength division pooling structure, two shared light source pool sites are passed through, to implement traffic sharing protection for a home broadband service, implement protection for a mobile bearer service that is implemented into a light source pool for integration or protection for the mobile bearer service that passes through an optical layer, implement protection for an enterprise private line service that is implemented into a light source pool for integration or protection for the enterprise private line service that passes through an optical layer, and implement protection for a hybrid service of a home broadband service, a mobile bearer service, and an enterprise private line service that is implemented into a light source pool for integration or protection for the hybrid service that passes through an optical layer.

It should be understood that, in the foregoing optical communication systems, the connection may be a direct connection or an indirect connection. This is not limited in this application. In a connection manner, a fiber interface unit (FIU, Fiber Interface Unit) may be disposed, and modules and WSSs are connected through an optical fiber. In the foregoing optical communication systems, a receiving module or a transceiver module of each node may be further provided with a device for interaction between an optical layer and an electrical layer, so that a service may be implemented through the electrical layer.

The foregoing describes in detail the apparatus embodiments of embodiments of this application with reference to FIG. 2 to FIG. 7. The following describes the method embodiments of embodiments of this application. The method embodiments correspond to the apparatus embodiments. Therefore, for a part that is not described in detail, refer to the foregoing apparatus embodiments.

FIG. 8 is a diagram of a communication method according to an embodiment of this application. The communication method is applied to an optical communication system. The optical communication system is similar to that in FIG. 2. The optical communication system may include a first node and a second node. The first node is connected to a first wavelength selective switch WSS, the first node is connected to a third WSS, the second node is connected to a second WSS, and the second node is connected to a fourth WSS. There is a first link between the first WSS and the second WSS, and the first link corresponds to a first wavelength. There is a second link between the third WSS and the fourth WSS, and the second link corresponds to a second wavelength. There is a third link between the third WSS and the second WSS, and the third link corresponds to a third wavelength. The method may include step S810 and step S820.

S810: The first node sends a first optical signal with the first wavelength to the first WSS.

S820: The first node sends a second optical signal with the second wavelength and a third optical signal with the third wavelength to the third WSS.

The first optical signal, the second optical signal, and the third optical signal carry a same service.

Specific selection of the first wavelength, the second wavelength, and the third wavelength is determined based on an actual situation. For example, the first wavelength and the third wavelength may be set to be the same, the first wavelength and the second wavelength are different, and the second wavelength and the third wavelength are different.

It should be understood that, in this application, the first node may send the first optical signal, the second optical signal, and the third optical signal simultaneously or not simultaneously. Similarly, the second node may receive the foregoing optical signals simultaneously or not simultaneously. Specifically, this may be determined based on an actual service protection manner. For example, in a "concurrent sending and selective receiving" mode, the first node may send three types of optical signals simultaneously, and the second node performs selective receiving; or the first node may switch a path and send the foregoing optical signals when a fault is detected on any path.

In FIG. 8, three different transmission paths for optical signals from the first node to the second node are constructed by using the four wavelength selective switches WSSs, and the optical signals that carry a same service are sent through the three different paths. When one or two of the three transmission paths are faulty, the service may continue to be sent to the second node through a remaining path, so that service sending protection is performed. Generally, a "1+1" mode is used for service protection. To be specific, on the basis that optical signals that carry a same service are sent by the first node to the second node in two directions to protect the service, a different transmission path for an optical signal is added, so that the service can be protected to a greater extent.

In some manners, the optical communication system may further include a third node 30 and a fourth node 40. The third node 30 includes the first WSS 311, the second WSS 312, and a first scheduling module 320. The fourth node 40 includes the third WSS 411, the fourth WSS 412, and a second scheduling module 420. The second scheduling module 420 is connected to the third WSS 411, and the first scheduling module 320 is connected to the second scheduling module 420. The first scheduling module 320 and the second scheduling module 420 are configured to transmit an optical signal between different nodes. By disposing at least two scheduling modules, an optical signal can be transmitted between different nodes, so that when the second WSS and the third WSS are located at different nodes, an optical layer between the third node and the fourth node is passed through, and an optical signal transmission path is constructed from the third WSS to the second WSS.

FIG. 9 is a diagram of another communication method according to an embodiment of this application. An optical communication system to which the method is applied is similar to that in FIG. 4. A first scheduling module, a second scheduling module, and a third WSS have a fourth link, and the fourth link corresponds to a fourth wavelength. The method may include step 910 and step 920.

Step 910: A first node sends a fourth optical signal with the fourth wavelength to a first WSS.

Step 920: The first node sends a fifth optical signal with a fifth wavelength to the third WSS.

The fourth optical signal and the fifth optical signal carry a same service. By disposing at least two scheduling modules, optical signals can be transmitted between different nodes, so that when the first WSS is located at a third node and the third WSS is located at a fourth node, an optical layer between the third node and the fourth node is passed through, and two optical signal transmission paths from the first node to the third node are constructed through the first WSS and the third WSS, thereby implementing service protection.

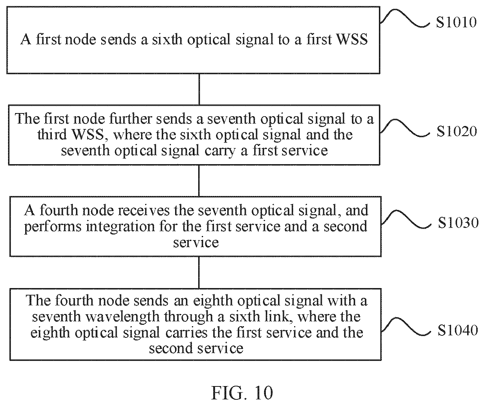

FIG. 10 is a diagram of another communication method according to an embodiment of this application. An optical communication system to which the method is applied is similar to that in FIG. 5. There is a fifth link between a third WSS 411 and a second scheduling module 420, and the fifth link corresponds to a sixth wavelength. There is a sixth link between a first scheduling module 320 and the second scheduling module 420, and the sixth link corresponds to a seventh wavelength. The method may include step 1010 to step 1040.

Step 1010: A first node sends a sixth optical signal to a first WSS.

Step 1020: The first node further sends a seventh optical signal to the third WSS, where the sixth optical signal and the seventh optical signal carry a first service.

Step 1030: A fourth node receives the seventh optical signal, and performs integration for the first service and a second service.

Step 1040: The fourth node sends an eighth optical signal with the seventh wavelength through the sixth link, where the eighth optical signal carries the first service and the second service.

To be specific, after an optical layer between a third node and the fourth node is passed through, service transmission may be directly performed between the third node and the fourth node by using optical signals, or integration for services may be first performed by the fourth node based on a feature that a node can perform integration for services, and then the protected services are sent.

In some implementations, the communication methods shown in FIG. 8 to FIG. 10 may be applied to a wavelength division pooling structure.

An optical communication system to which the methods are applied belongs to a metropolitan area network system. The first node is a central office site, the second node is a core site or a sub-core site, and the third node and the fourth node are aggregation sites. In the metropolitan area network system, the third node and the fourth node are configured to: implement a service transmitted by the first node to the second node, perform convergence and integration, and transmit, to the second node through an uplink, service transmission sent by the first node.

The first WSS and the second WSS are disposed at the third node and the third WSS and the fourth WSS are disposed at the fourth node. In this way, an optical layer between the first node and the second node may be directly passed through, and the first node may transmit a service to the second node via a wavelength-level optical signal, and convergence and integration are not required at the third node or the fourth node, thereby improving service transmission efficiency of the aggregation site and the core site/sub-core site.

The first WSS can be configured to transmit an optical signal in a first resource pool, the first resource pool includes T sub-signals with different wavelengths, T is a positive integer greater than 1, the T sub-signals with different wavelengths carry services of the first node and the fourth node, and the second optical signal and the third optical signal belong to the T sub-signals with different wavelengths. The second WSS can be configured to transmit an optical signal in a second resource pool, the second resource pool includes S sub-signals with different wavelengths, S is a positive integer greater than 1, the S sub-signals with different wavelengths carry services of the first node and the third node, and the first optical signal belongs to the S sub-signals with different wavelengths.

This may be understood as that, in a first direction, the third node and the first node connected to the first WSS share an optical signal in the first resource pool, and perform service transmission via the sub-signals with a plurality of wavelengths included in the first resource pool. In a second direction, the fourth node and the first node connected to the third WSS share an optical signal in the second resource pool, and perform service transmission via the sub-signals with a plurality of wavelengths included in the second resource pool. Therefore, the first node may transmit a same service by using optical signals of the two resource pools, to ensure service transmission when there is a problem, for example, a core component (for example, a WSS) is faulty or an optical fiber is faulty, in the system.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical communication system, comprising:
at least two nodes, configured to receive and/or send an optical signal;
a first wavelength selective switch WSS, connected to a first node in the at least two nodes;
a third WSS, connected to the first node;
a second WSS, connected to a second node in the at least two nodes, wherein there is a first link between the first WSS and the second WSS, and there is a third link between the third WSS and the second WSS; and
a fourth WSS, connected to the second node, wherein there is a second link between the third WSS and the fourth WSS, wherein
the first WSS is configured to transmit an optical signal with a first wavelength to the second WSS through the first link, and the second WSS is configured to transmit the first optical signal with the first wavelength to the second node;
the third WSS is configured to transmit an optical signal with a second wavelength to the fourth WSS through the second link, and the fourth WSS is configured to transmit the optical signal with the second wavelength to the second node;
the third WSS is configured to transmit an optical signal with a third wavelength to the second WSS through the third link, and the second WSS is configured to transmit the optical signal with the third wavelength to the second node; and
the first node is configured to: send the first optical signal with the first wavelength to the first WSS, send the second optical signal with the second wavelength to the third WSS, and send the third optical signal with the third wavelength to the third WSS, wherein the first optical signal, the second optical signal, and the third optical signal carry a same service.

2. The optical communication system according to claim 1, wherein in the system,
the third link comprises at least two scheduling modules, wherein the scheduling module comprises at least any one of a WSS or an optical coupler/beam splitter, and the at least two scheduling modules are configured to transmit the optical signal with the third wavelength between different nodes; and
a third node in the at least two nodes comprises the first WSS, the second WSS, and a first scheduling module in the at least two scheduling modules, and a fourth node in the at least two nodes comprises the third WSS, the fourth WSS, and a second scheduling module in the at least two nodes.

3. The optical communication system according to claim 2, wherein in the system,
the first scheduling module, the second scheduling module, and the third WSS have a fourth link;
the first WSS is further configured to transmit an optical signal with a fourth wavelength to the third node;
the third WSS is further configured to transmit an optical signal with a fifth wavelength to the third node through the fourth link; and
the first node is further configured to: send the fourth optical signal with the fourth wavelength to the first WSS, and send the fifth optical signal with the fifth wavelength to the third WSS, wherein the fourth optical signal and the fifth optical signal carry a same service.

4. The optical communication system according to claim 2, wherein in the system,
there is a fifth link between the third WSS and the second scheduling module, the fifth link corresponds to a sixth wavelength, there is a sixth link between the first scheduling module and the second scheduling module, and the sixth link corresponds to a seventh wavelength;
the first WSS is further configured to transmit an optical signal with an eighth wavelength to the third node;
the third WSS is further configured to transmit a seventh optical signal with the sixth wavelength to the fourth node;
the first node is further configured to: send the sixth optical signal with the eighth wavelength to the first WSS, and send the seventh optical signal with the sixth wavelength to the third WSS, wherein the sixth optical signal and the seventh optical signal carry a first service; and
the fourth node is configured to: receive the seventh optical signal, perform integration for the first service and a second service, and send an eighth optical signal with the seventh wavelength through the sixth link, wherein the eighth optical signal carries the first service and the second service.

5. The optical communication system according to any one of claims 2 to 4, wherein the first WSS is configured to transmit an optical signal in a first resource pool, the first resource pool comprises T sub-signals with different wavelengths, T is a positive integer greater than 1, the T sub-signals with different wavelengths carry services of the first node and the fourth node, and the second optical signal and the third optical signal belong to the T sub-signals with different wavelengths; and
the second WSS is configured to transmit an optical signal in a second resource pool, the second resource pool comprises S sub-signals with different wavelengths, S is a positive integer greater than 1, the S sub-signals with different wavelengths carry services of the first node and the third node, and the first optical signal belongs to the S sub-signals with different wavelengths.

6. The system according to any one of claims 2 to 5, wherein the optical communication system belongs to a metropolitan area network system, the first node is a central office site, the second node is a core site or a sub-core site, and the third node and the fourth node are aggregation sites.

7. A communication method, applied to an optical communication system, wherein the optical communication system comprises at least two nodes, the at least two nodes comprise a first node and a second node, the first node is connected to a first wavelength selective switch WSS, the first node is connected to a third WSS, the second node is connected to a second WSS, the second node is connected to a fourth WSS, wherein there is a first link between the first WSS and the second WSS, the first link corresponds to a first wavelength, there is a second link between the third WSS and the fourth WSS, the second link corresponds to a second wavelength, there is a third link between the third WSS and the second WSS, and the third link corresponds to a third wavelength, and the method comprises:
sending, by the first node, a first optical signal with the first wavelength to the first WSS; and
sending, by the first node, a second optical signal with the second wavelength and a third optical signal with the third wavelength to the third WSS, wherein
the first optical signal, the second optical signal, and the third optical signal carry a same service.

8. The method according to claim 7, wherein in the optical communication system,
the third link comprises at least two scheduling modules, wherein the scheduling module comprises at least any one of a WSS or an optical coupler/beam splitter, and the at least two scheduling modules are configured to transmit the optical signal with the third wavelength between different nodes; and
a third node in the at least two nodes comprises the first WSS, the second WSS, and a first scheduling module in the at least two scheduling modules, and a fourth node in the at least two nodes comprises the third WSS, the fourth WSS, and a second scheduling module in the at least two nodes.

9. The method according to claim 8, wherein in the optical communication system, the first scheduling module, the second scheduling module, and the third WSS have a fourth link, and the fourth link corresponds to a fourth wavelength, and the method further comprises:
sending, by the first node, a fourth optical signal with the fourth wavelength to the first WSS; and
sending, by the first node, a fifth optical signal with a fifth wavelength to the third WSS, wherein
the fourth optical signal and the fifth optical signal carry a same service.

10. The method according to claim 8, wherein in the optical communication system, there is a fifth link between the third WSS and the second scheduling module, the fifth link corresponds to a sixth wavelength, there is a sixth link between the first scheduling module and the second scheduling module, and the sixth link corresponds to a seventh wavelength, and the method further comprises:
sending, by the first node, a sixth optical signal with an eighth wavelength to the first WSS;
further sending, by the first node, a seventh optical signal with the sixth wavelength to the third WSS, wherein the sixth optical signal and the seventh optical signal carry a first service;
receiving, by the fourth node, the seventh optical signal, and performing integration for the first service and a second service; and
sending, by the fourth node, an eighth optical signal with the seventh wavelength through the sixth link, wherein the eighth optical signal carries the first service and the second service.

11. The method according to any one of claims 7 to 10, wherein the first WSS is configured to transmit an optical signal in a first resource pool, the first resource pool comprises T sub-signals with different wavelengths, T is a positive integer greater than 1, the T sub-signals with different wavelengths are used by the first node and the fourth node for service transmission, and the second optical signal and the third optical signal belong to the T sub-signals with different wavelengths; and
the second WSS is configured to transmit an optical signal in a second resource pool, the second resource pool comprises S sub-signals with different wavelengths, S is a positive integer greater than 1, the S sub-signals with different wavelengths are used by the first node and the third node for service transmission, and the first optical signal belongs to the S sub-signals with different wavelengths.

12. The method according to any one of claims 8 to 11, wherein the optical communication system belongs to a metropolitan area network system, the first node is a central office site, the second node is a core site or a sub-core site, and the third node and the fourth node are aggregation sites.
